# EUROPÄISCHE PATENTSCHRIFT

(11) **EP 2 761 193 B1**
(45) Veröffentlichungstag und Bekanntmachung des Hinweises auf die Patenterteilung: **21.12.2016**
(21) Anmeldenummer: 12733157.7
(22) Anmeldetag: 10.07.2012
(51) Int. Cl.: F16B 19/14

(54) **BEFESTIGUNGSSYSTEM**
FASTENING SYSTEM
SYSTÈME DE FIXATION

(30) Priorität: 29.09.2011 DE 102011083779
(43) Veröffentlichungstag der Anmeldung: 06.08.2014
(73) Patentinhaber: HILTI Aktiengesellschaft, 9494 Schaan (LI)
(72) Erfinder: LOR, Ferenc, CH-9470 Buchs (CH); BOENIG, Stefan, 88142 Achberg-Esseratsweiler (DE); MATHESIUS, Christian, CH-9443 Widnau (CH)
(74) Vertreter: Hilti Aktiengesellschaft Corporate Intellectual Property
(86) Internationale Anmeldenummer: PCT/EP2012/063476
(87) Internationale Veröffentlichungsnummer: WO 2013/045130

(56) Entgegenhaltungen:
- EP-A1- 0 282 445
- EP-A2- 0 321 396
- DE-A1- 1 478 868
- DE-A1-102008 043 435
- DE-B- 1 009 570
- FR-A- 1 566 657
- GB-A- 1 104 014
- US-A- 2 724 303
- US-A- 3 611 863

## Beschreibung

Die vorliegende Erfindung betrifft eine Kombination gemäß dem Oberbegriff des Anspruches 1 und ein Verfahren zum Befestigen eines Anbauteiles mit einem Setzbolzen an einem Setzgegenstand gemäß dem Oberbegriff des Anspruches 10.

Befestigungssysteme werden eingesetzt, um mittels eines Setzbolzens an einem Setzgegenstand ein Anbauteil zu befestigen. Das Anbauteil ist beispielsweise ein Gitterrostteller, ein Elektrobefestiger oder ein Abstandhalter und der Setzgegenstand ist beispielsweise eine Metallplatte, insbesondere Stahlplatte, oder eine Betonwand bzw. eine Betondecke. Der Setzbolzen weist einen Befestigungsabschnitt und einen Lastangriffsabschnitt auf. Der Befestigungsabschnitt ist als Spitze ausgebildet und wird mittels eines Setzgerätes in den Setzgegenstand eingesetzt. Dabei wird von der Spitze an dem Befestigungsabschnitt des Setzbolzens das Material des Setzgegenstandes verformt und dadurch der Befestigungsabschnitt insbesondere kraftschlüssig an dem Setzgegenstand befestigt. An dem Lastangriffsabschnitt des Setzbolzens kann beispielsweise mittels eines Gewindes das Anbauteil befestigt werden. Nach dem Einsetzen des Setzbolzens in dem Setzgegenstand ist dieser bei feuchten Umgebungsbedingungen Wasser, Wasserdampf bzw. Feuchtigkeit ausgesetzt. Dies kann zu einer Korrosion des Setzbolzens führen. Bei einem Setzbolzen aus C-Stahl kann es auch zu einer Wasserstoffversprödung des Setzbolzens kommen. Dies kann zu einem Versagen des Setzbolzens führen, so dass sich das Anbauteil von dem Setzgegenstand löst.

Aus der DE 1 475 052 ist ein Verfahren zum Befestigen eines Gegenstandes, z. B. einer Platte, an einem tragenden Teil, bei dem ein Setzbolzen durch ein in axialer Richtung relatives steifes Befestigungselement und den zu befestigenden Gegenstand hindurch in den tragenden Teil eingeschossen wird, bekannt.

Die DE 10 2008 043 435 A1 zeigt einen Gewindebolzen mit einem Befestigungsabschnitt, einem Lastangriffsabschnitt, an dem ein Gewinde angeordnet ist, und einem Kopf. Der Lastangriffsabschnitt weist einen stiftförmigen Kernbereich auf, der einteilig mit dem Befestigungsabschnitt und dem Kopf ausgebildet ist, wobei der Kernbereich, der Befestigungsabschnitt und der Kopf aus einem Material bestehen und wobei radial außen an dem Kernbereich eine das Gewinde tragende Gewindehülse aus einem Kunststoffmaterial festgelegt ist. Der Befestigungsabschnitt ist dabei mit einem ringscheibenförmigen Dichtelement aus Kunststoff versehen.

Die Aufgabe der vorliegenden Erfindung besteht darin, ein Befestigungssystem und ein Verfahren zum Befestigen eines Anbauteiles mit einem Setzbolzen an einem Setzgegenstand zur Verfügung zu stellen, bei dem Korrosion an dem Setzbolzen dauerhaft vermieden werden kann.

Diese Aufgabe wird gelöst mit einer Kombination nach Anspruch 1. Nach einem bevorzugten Ausführungsbeispiel umfaßt die Kombination ein Befestigungssystem zum Befestigen eines Anbauteiles an einem Setzgegenstand mittels eines Setzbolzens, umfassend den Setzbolzen, der ein erstes Ende und ein zweites Ende aufweist, mit einem Befestigungsabschnitt und einem Lastangriffsabschnitt, ein, vorzugsweise ring- oder hülsenförmiges, Dichtungselement mit einer Öffnung zum Abdichten des in einen Setzgegenstand eingesetzten Setzbolzens und der Setzbolzen innerhalb der Öffnung angeordnet ist, vorzugsweise das Anbauteil, z. B. ein Gitterrostteller, ein Elektrobefestiger oder ein Abstandhalter, zum Befestigen an dem Lastangriffsabschnitt des Setzbolzens, wobei die axiale Ausdehnung des Dichtungselementes vor dem Setzen des Setzbolzens wenigstens 5%, 10%, 20%, 30% oder 50% der axialen Ausdehnung des Setzbolzens beträgt, so dass in einem eingesetzten Zustand des Setzbolzens das Dichtungselement an einem ersten Ende auf dem Setzgegenstand und an einem zweiten Ende auf dem Anbauteil und/oder dem Setzbolzen aufliegt.

Aufgrund der axialen Ausdehnung des Dichtungselementes liegt im eingesetzten Zustand des Setzbolzens das Dichtungselement sowohl an dem Setzgegenstand als auch an dem Anbauteil und/oder dem Setzbolzen auf. Der Setzbolzen ist nach dem Setzen in den Setzgegenstand (tragendes Teil) Umwelteinflüssen, z. B. Wasser oder Feuchtigkeit, ausgesetzt. Aufgrund dieser axialen Ausdehnung des Dichtungselementes dichtet das Dichtungselement diesen axialen Teilabschnitt bezüglich der Umgebung ab, so dass dadurch der Setzbolzen nicht Feuchtigkeit aus der Umgebung ausgesetzt ist. Somit kann eine Korrosion oder eine Wasserstoffversprödung an dem Setzbolzen vermieden werden. In vorteilhafter Weise kann der Setzbolzen auf Dauer hohen Belastungen Stand halten und ferner kann der Setzbolzen aus einem Material hergestellt werden, welches korrosionsanfällig ist, wobei jedoch aufgrund der Abdichtung mit dem Dichtungselement keine Korrosion auftritt. Dadurch können auch Kosten bei der Herstellung des Setzbolzens vermieden werden. Das zweite Ende des Dichtungselementes kann auch ein zweiter Abschnitt oder Bereich des Dichtungselementes sein unabhängig von einem dem ersten Ende gegenüberliegenden Ende des Dichtungselementes.

Insbesondere ist die axiale Ausdehnung des Dichtungselementes dahingehend ausgebildet, dass in einem eingesetzten Zustand des Setzbolzens das Dichtungselement an einem ersten Ende auf dem Setzgegenstand und an einem zweiten Ende auf dem Anbauteil und/oder dem Setzbolzen aufliegt.

In einer weiteren Ausgestaltung ist der Innendurchmesser des Dichtungselementes größer als der maximale Durchmesser des Setzbolzens, so dass mit dem Dichtungselement ein axialer Teilabschnitt des Setzbolzens in einem eingesetzten Zustand zwischen dem Setzgegenstand und dem zweiten Ende, insbesondere dem Anbauteil, von dem Dichtungselement vollständig umhüllt ist. Der Innendurchmesser des Dichtungselementes, insbesondere der maximale Innendurchmesser des Dichtungselementes, ist größer als der maximale Durchmesser des Setzbolzens. Dadurch kann das Dichtungselement an dem axialen Teilabschnitt den Setzbolzen vollständig umschließen und aufgrund der Abdichtung, d. h. des Aufliegens des Dichtungselementes sowohl an dem Setzgegenstand als auch auf dem Anbauteil und/oder dem Setzbolzen ist der Teilabschnitt des Setzbolzens vollständig abgedichtet bezüglich der Umgebung.

In einer ergänzenden Ausführungsform ist der maximale Durchmesser des Setzbolzens nur an einem axialen Teilabschnitt des Setzbolzens berücksichtigt an welchem das Dichtungselement angeordnet ist.

Vorzugsweise besteht das Dichtungselement wenigstens teilweise, insbesondere vollständig, aus einem elastischen Material, z. B. einem Elastomer oder Kunststoff.

In einer ergänzenden Variante weist der Setzbolzen einen Durchmesser zwischen 0,5 mm und 15 mm, vorzugsweise zwischen 0,5 mm und 10 mm, insbesondere zwischen 2 mm und 5 mm auf.

Zweckmäßig ist der Setzbolzen an dem ersten Ende mit einer Spitze versehen und/oder der Setzbolzen ist an dem Lastangriffsabschnitt mit einer Einrichtung zum Befestigen des Anbauteiles, z. B. einem Gewinde, einem Bajonettverschluss oder einer Schnappverbindung insbesondere aus Kunststoff und/oder Metall, versehen. An dem ersten Ende mit der Spitze wird der Setzbolzen in Setzrichtung in den Setzgegenstand eingetrieben oder eingesetzt.

In einer weiteren Ausführungsform ist das Dichtungselement an dem Setzbolzen angeordnet und/oder befestigt. Das Dichtungselement ist bereits während des Setzens des Setzbolzens an dem Setzbolzen befestigt und anschließend wird an dem Setzbolzen mit dem Dichtungselement das Anbauteil befestigt.

Insbesondere umfasst das Befestigungssystem das Anbauteil und das Dichtungselement ist an dem Anbauteil angeordnet und/oder befestigt. Während des Setzens des Setzbolzens ist das Dichtelement nicht an dem Setzbolzen befestigt und erst mit dem Befestigen des Anbauteils an den Setzbolzen, wobei an dem Anbauteil das Dichtungselement angeordnet oder befestigt ist oder wird, wird das Befestigungssystem mit dem Dichtungselement versehen.

In einer weiteren Ausgestaltung besteht der Setzbolzen wenigstens teilweise, insbesondere vollständig, aus Metall, z. B. Stahl, C-Stahl, Edelstahl, Kupfer oder Aluminium. Zweckmäßig besteht der Setzbolzen aus Kunststoff, insbesondere glasfaserverstärktem Kunststoff.

Erfindungsgemäßes Verfahren zum Befestigen eines Anbauteiles mit einem Setzbolzen an einem Setzgegenstand, insbesondere mit einem in dieser Schutzrechtsanmeldung beschriebenen Befestigungssystem, mit den Schritten: Setzen des Setzbolzens in den Setzgegenstand, z. B. eine Betonwand oder eine Metallplatte, Verbinden des Anbauteiles mit dem Setzbolzen, indem das Anbauteil an einem Lastangriffsabschnitt des Setzbolzens befestigt wird, Abdichten des Setzbolzens mit einem, vorzugsweise ring- oder hülsenförmigen, Dichtungselement mit einer Öffnung und innerhalb der Öffnung der Setzbolzen angeordnet ist und dabei das Dichtungselement, insbesondere an einem ersten Ende des Dichtungselementes, mit dem Setzgegenstand kontaktiert wird, wobei von dem Dichtungselement, insbesondere an einem zweiten Ende des Dichtungselementes, zusätzlich das Anbauteil und/oder der Setzbolzen kontaktiert wird und dadurch der Setzbolzen zwischen dem Anbauteil und dem Setzgegenstand, insbesondere vollständig, bezüglich der Umgebung abgedichtet wird. Das Dichtungselement liegt damit sowohl an dem Anbauteil als auch an dem Setzgegenstand auf, so dass dadurch, insbesondere aufgrund der Geometrie des Dichtungselementes, der Setzbolzen in dem axialen Teilabschnitt zwischen dem Anbauteil und dem Setzgegenstand vollständig von dem Dichtungselement umschlossen und abgedichtet ist. Vorzugsweise wird dabei der Setzbolzen auch von dem Setzgegenstand und/oder von dem Anbauteil abgedichtet.

Zweckmäßig wird ein Teil zum Befestigen des Anbauteiles, z. B. eine Hutmutter, auch als Anbauteil betrachtet.

In einer ergänzenden Variante wird das Dichtungselement zwischen dem Anbauteil und dem Setzgegenstand elastisch vorgespannt nach dem Setzen des Setzbolzens.

In einer weiteren Variante ist und/oder wird das Dichtungselement vor dem Setzen des Setzbolzens an dem Setzbolzen und/oder dem Anbauteil befestigt.

In einer weiteren Ausgestaltung wird nach dem Setzen des Setzbolzens von dem Dichtungselement ein axialer Teilabschnitt des Setzbolzens zwischen dem Anbauteil und dem Setzgegenstand vollständig umschlossen.

Insbesondere wird das Anbauteil fluid- und staubdicht an dem Setzbolzen befestigt, so dass aufgrund der Abdichtung zwischen dem Dichtungselement und dem Anbauteil sowie zwischen dem Dichtungselement und dem Setzgegenstand der Setzbolzen vollständig bezüglich der Umgebung abgedichtet ist und/oder wird.

In einer weiteren Ausgestaltung wird die Form des Dichtungselementes während des Setzens des Setzbolzens verändert, insbesondere wird das Dichtungselement elastisch verformt.

Zweckmäßig ist von dem Dichtungselement der Setzbolzen an einem axialen Teilabschnitt vollständig umschlossen.

Im Nachfolgenden werden Ausführungsbeispiele der Erfindung unter Bezugnahme auf die beigefügten Zeichnungen näher beschrieben. Es zeigt:
- Fig. 1: einen Längsschnitt eines Befestigungssystems in einem ersten Ausführungsbeispiel vor dem Setzen des Setzbolzens in einen Setzgegenstand,
- Fig. 2: das Befestigungssystem gemäß Fig. 1 nach dem Setzen des Setzbolzens in den Setzgegenstand und während des Befestigen eines Anbauteiles an dem Setzbolzen,
- Fig.3: das Befestigungssystem gemäß Fig. 1 nach dem Setzen des Setzbolzens in den Setzgegenstand und nach dem Befestigen des Anbauteiles an dem Setzbolzen,
- Fig.4: einen Längsschnitt des Befestigungssystems in einem zweiten Ausführungsbeispiel vor dem Setzen des Setzbolzens in den Setzgegenstand,
- Fig.5: das Befestigungssystem gemäß Fig. 4 nach dem Setzen des Setzbolzens in den Setzgegenstand und während des Befestigen des Anbauteiles an dem Setzbolzen,
- Fig. 6: das Befestigungssystem gemäß Fig. 4 nach dem Setzen des Setzbolzens in den Setzgegenstand und nach dem Befestigen des Anbauteiles an dem Setzbolzen,
- Fig.7: einen Längsschnitt des Befestigungssystems in einem dritten Ausführungsbeispiel vor dem Setzen des Setzbolzens in den Setzgegenstand,
- Fig.8: das Befestigungssystem gemäß Fig. 7 nach dem Setzen des Setzbolzens in den Setzgegenstand und während des Befestigen des Anbauteiles an dem Setzbolzen,
- Fig.9: das Befestigungssystem gemäß Fig. 7 nach dem Setzen des Setzbolzens in den Setzgegenstand und nach dem Befestigen des Anbauteiles an dem Setzbolzen,
- Fig. 10: einen Längsschnitt des Befestigungssystems in einem vierten Ausführungsbeispiel vor dem Setzen des Setzbolzens in den Setzgegenstand,
- Fig. 11: das Befestigungssystem gemäß Fig. 10 nach dem Setzen des Setzbolzens in den Setzgegenstand und während des Befestigen des Anbauteiles an dem Setzbolzen und
- Fig. 12: das Befestigungssystem gemäß Fig. 10 nach dem Setzen des Setzbolzens in den Setzgegenstand und nach dem Befestigen des Anbauteiles an dem Setzbolzens.

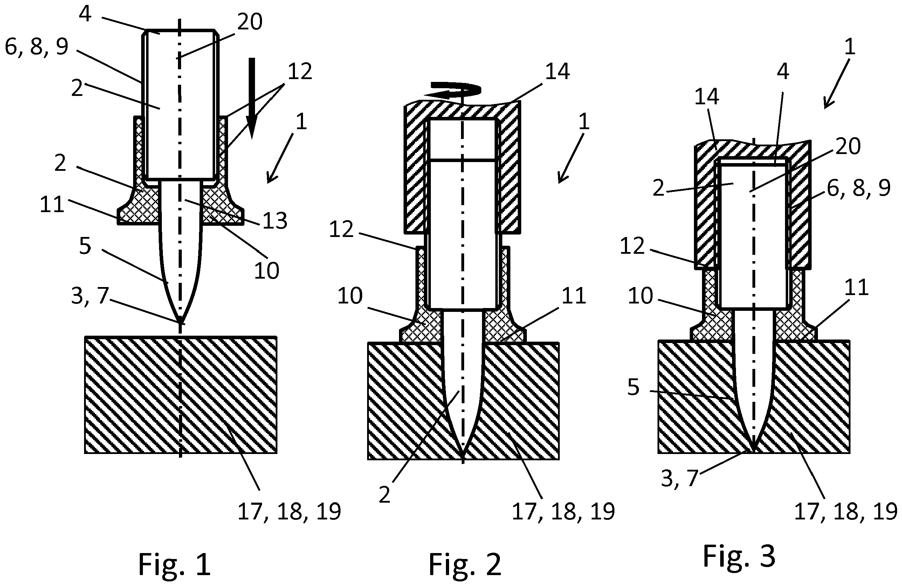

In den Fig. 1 bis 3 ist ein erstes Ausführungsbeispiel eines Befestigungssystems 1 dargestellt. Das Befestigungssystem 1 umfasst einen Setzbolzen 2, ein Dichtungselement 10 und vorzugsweise ein Anbauteil 14. Mithilfe des Setzbolzens 2 kann das Anbauteil 14 an einem Setzgegenstand 17, z. B. einer Betonwand 18 oder einer Metallplatte 19, befestigt werden. Der Setzgegenstand 17 stellt somit das tragende Teil dar. Der Setzbolzen 2 weist ein erstes Ende 3 und ein zweites Ende 4 auf. Ein Setzen des Setzbolzens 2 mit einem nicht dargestellten Setzgerät wird parallel zu einer Längsachse 20 des Setzbolzens 2 in Setzrichtung gemäß Pfeilrichtung in Fig. 1, d. h. parallel zu der Längsachse 20 des Setzbolzens 2, in den Setzgegenstand eingesetzt bzw. eingetrieben. Ein unterer Befestigungsabschnitt 5 des Setzbolzens 2 ist konisch bzw. als Spitze 7 ausgebildet und an einem Lastangriffsabschnitt 6 kann das Anbauteil 14 befestigt werden. Dabei weist der Lastangriffsabschnitt 6 eine Einrichtung 8 zum Befestigen des Anbauteiles 14 auf, d. h. ein Gewinde 9. Der Lastangriffsabschnitt 6 weist somit ein Außengewinde auf und in einer Bohrung des Anbauteiles 14 ist ein Innengewinde ausgebildet, welches in das Außengewinde an dem Lastangriffsabschnitt 6 gemäß der Darstellung in Fig. 2 eingeschraubt werden kann.

Bereits vor dem Setzen des Setzbolzens 2 ist an dem Setzbolzen 2 das hülsenförmige Dichtungselement 10 aus elastischem Kunststoff befestigt. Das Dichtungselement 10 weist ein erstes Ende 11 und ein zweites Ende 12 auf und innerhalb einer Öffnung 13 des Dichtungselementes 10 ist sowohl der Befestigungsabschnitt 5 als auch der Lastangriffsabschnitt 6 des Setzbolzens 2 angeordnet oder liegt darauf auf (Fig. 1). Nach dem Setzen des Setzbolzens 2 in den Setzgegenstand 17 (Fig. 2) ist der Befestigungsabschnitt 5 im Wesentlichen kraftschlüssig und vorzugsweise auch formschlüssig an dem Setzgegenstand 17 befestigt. Dabei liegt das erste Ende 11 des Dichtungselementes 10 auf dem Setzgegenstand 17 auf und das Dichtungselement 10 umschließt einen axialen Teilabschnitt des Setzbolzens 2, an welchem das Dichtungselement 10 aufliegt, vollständig. Beim Aufschrauben des Anbauteiles 14 auf den Lastangriffsabschnitt 6 des Setzbolzens 2 kommt das Anbauteil 14 auf dem zweiten Ende 12 des Dichtungselements 10 zum Aufliegen, so dass das elastische Dichtungselement 10 sowohl an dem Anbauteil 14 als auch an dem Setzgegentand 17 aufliegt und zwischen dem Anbauteil 14 und dem Setzgegenstand 17 elastisch vorgespannt ist. Das Anbauteil 14 umschließt dabei den Setzbolzen 2 fluiddicht und aufgrund der Abdichtung des axialen Teilabschnittes des Setzbolzens 2 zwischen dem Anbauteil 14 und dem Setzgegenstand 17 ist der Setzbolzen 2 fluid- und staubdicht bezüglich der Umgebung abgedichtet gemäß der Darstellung in Fig. 3. Dadurch können in vorteilhafter Weise an dem Setzbolzen 2 bei Wasser oder Feuchtigkeit in der Umgebung keine Beschädigungen aufgrund von Korrosion oder Wasserstoffversprödung auftreten. In dem ersten Ausführungsbeispiel ist das Dichtungselement 10 an dem Setzbolzen 2 befestigt, so dass es sich um ein Setzbolzendichtungselement 10 handelt.

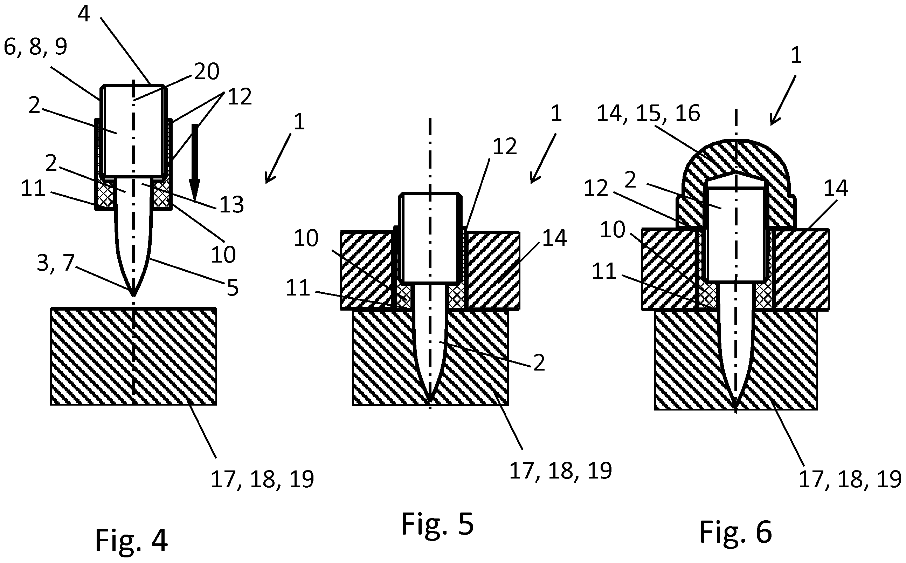

In den Fig. 4 bis 6 ist ein zweites Ausführungsbeispiel des Befestigungssystems 1 darstellt, welches jedoch nicht erfindungsgemäß ist. Im Nachfolgenden werden im Wesentlichen nur die Unterschiede zu dem ersten Ausführungsbeispiel gemäß den Fig. 1 bis 3 beschrieben. Das Anbauteil 14 weist eine Bohrung auf und innerhalb dieser Bohrung ist nach dem Setzen des Setzbolzens 2 das Dichtungselement 10 angeordnet. Dabei wird das Anbauteil 14 mittels eines Teiles 15 zum Befestigen des Anbauteiles 14, nämlich einer Hutmutter 16, an dem Lastangriffsabschnitt 6 mit dem Außengewinde gemäß der Darstellung in Fig. 6 befestigt. Dabei wird das Teil 15 auch als Anbauteil 14 betrachtet und in der Darstellung in Fig. 6 ist in analoger Weise zu dem ersten Ausführungsbeispiel das Dichtungselement 10 elastisch zwischen dem Teil 15, d. h. der Hutmutter 16, und dem Setzgegenstand 17 in axialer Richtung elastisch vorgespannt. Dadurch ist auch im zweiten Ausführungsbeispiel der Setzbolzen 2 fluid- und staubdicht bezüglich der Umgebung abgedichtet. Das Dichtungselement 10 ist auch im zweiten Ausführungsbeispiel an dem Setzbolzen 2 befestigt, so dass es sich auch im zweiten Ausführungsbeispiel um ein Setzbolzendichtungselement 10 handelt.

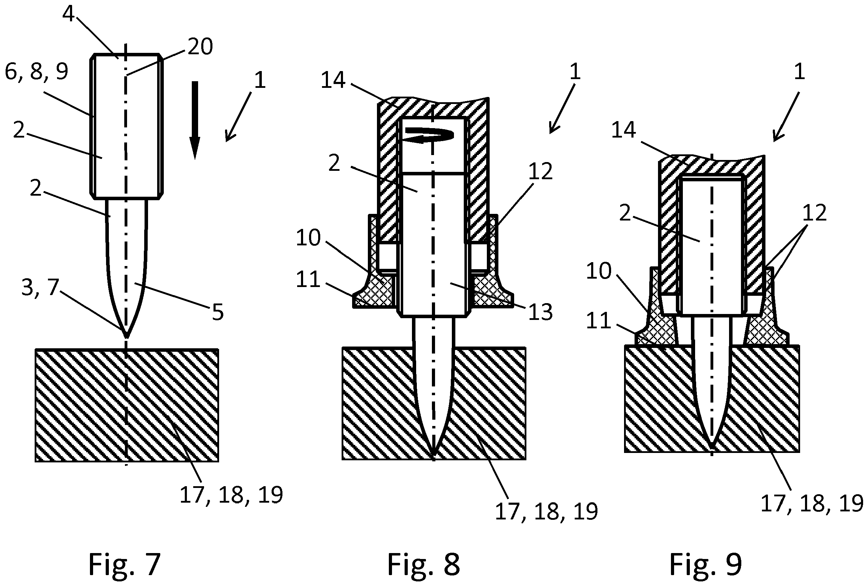

In den Fig. 7 bis 9 ist ein drittes Ausführungsbeispiel des Befestigungssystems 1 dargestellt. Im Nachfolgenden werden im Wesentlichen nur die Unterschiede zu dem ersten Ausführungsbeispiel beschrieben. Das Dichtungselement 10 ist während des Setzbolzens 2 nicht an dem Setzbolzen 2, sondern an dem Anbauteil 14 befestigt. Somit handelt es sich bei dem Dichtungselement 10 um ein Anbauteildichtungselement 10. Beim Aufschrauben des Anbauteiles 14, an welchem das Dichtungselement 10 befestigt ist, ist das Dichtungselement 10 bereits in Kontakt mit dem Anbauteil 14, so dass dadurch bereits das Anbauteil 14 bezüglich des Dichtungselementes 10 abgedichtet ist. Beim Aufschrauben des Anbauteiles 14 in Setzrichtung nach unten kommt das Dichtungselement 10 zum Aufliegen und in Kontakt mit dem Setzgegenstand 17 und bei einem weiteren Einschrauben des Anbauteiles 14 in das Gewinde an dem Lastangriffsabschnitt 6 wird das Dichtungselement 10 elastisch zwischen dem Anbauteil 14 und dem Setzgegenstand 17 vorgespannt. Dadurch ist in vorteilhafter Weise der Setzbolzen 2 bezüglich der Umgebung fluid- und staubdicht abgedichtet, weil das Dichtungselement 10 an einem axialen Teilabschnitt des Setzbolzens 2 den Setzbolzen 2 vollständig umschließt und das Dichtungselement 10 fluiddicht auf dem Anbauteil 14 und fluiddicht auf dem Setzgegenstand 17 aufliegt.

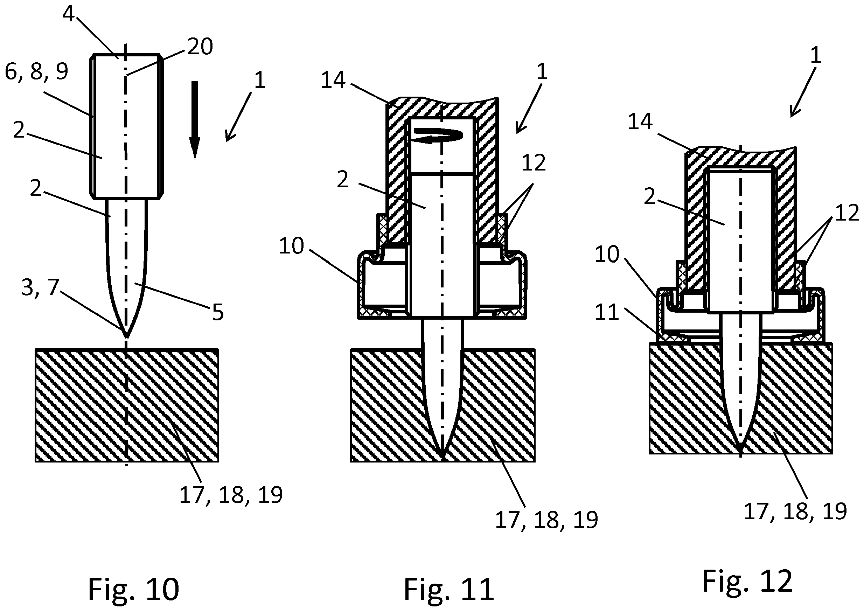

In den Fig.10 bis 12 ist ein viertes Ausführungsbeispiel des Befestigungssystems 1 darstellt. Im Nachfolgenden werden im Wesentlichen nur die Unterschiede zu dem dritten Ausführungsbeispiel gemäß Fig. 7 bis 9 beschrieben. Das Dichtungselement 10 ist wie in dem dritten Ausführungsbeispiel an dem Anbauteil 14 und nicht an dem Setzbolzen 2 befestigt, so dass es sich um ein Anbauteildichtungselement 10 handelt. Dabei unterscheidet sich die Form des Dichtungselementes 10 von dem dritten Ausführungsbeispiel des Befestigungssystems 1. Das Dichtungselement 10 ist zwischen dem ersten Ende 11 und dem zweiten Ende 12 in einem Teilabschnitt im Querschnitt teilweise als Schlauch S-förmig ausgebildet und eine elastische Vorspannung des Dichtungselementes nach dem Setzen des Setzbolzens 2 gemäß der Darstellung in Fig. 12 wird im Wesentlichen aufgrund einer Verformung dieses S-förmigen Teilabschnittes des Dichtungselementes 10 erreicht.

Insgesamt betrachtet sind mit dem erfindungsgemäßen Befestigungssystem 1 wesentliche Vorteile verbunden. Mit dem Dichtungselement 10 aus einem elastischen Material kann der Setzbolzen 2 vollständig im gesetzten Zustand bezüglich der Umgebung abgedichtet werden, so dass dadurch Korrosion oder Wasserstoffversprödung an dem Setzbolzen 2 auch bei einer feuchten Umgebung vermieden werden kann.

## Patentansprüche

1. Kombination eines Anbauteiles (14) und eines Befestigungssystems (1) zum Befestigen eines Anbauteiles (14) an einem Setzgegenstand (17) mittels eines Setzbolzens (2), das Befestigungssystem (1) umfassend
- den Setzbolzen (2), der ein erstes Ende (3) und ein zweites Ende (4) aufweist, mit einem Befestigungsabschnitt (5) und einem Lastangriffsabschnitt (6) mit einem Außengewinde,
- ein Dichtungselement (10) mit einer Öffnung (13) zum Abdichten des in den Setzgegenstand (17) eingesetzten Setzbolzens (2), wobei der Setzbolzen (2) innerhalb der Öffnung (13) angeordnet ist,
- das Anbauteil (14), welches an dem Lastangriffsabschnitt (6) des Setzbolzens (2) festgeschraubt ist, die Kombination weiter umfassend
- den Setzgegenstand (17), an welchem der Befestigungsabschnitt (5) befestigt ist,
**dadurch gekennzeichnet, dass**
das Dichtungselement (10) an einem ersten Ende (11) auf dem Setzgegenstand (17) und an einem zweiten Ende (12) auf dem Anbauteil (14) aufliegt.

2. Kombination nach Anspruch 1,
**dadurch gekennzeichnet, dass**
der Innendurchmesser des Dichtungselementes (10) größer ist als der maximale Durchmesser des Setzbolzens (2).

3. Kombination nach einem oder mehreren der vorhergehenden Ansprüche,
**dadurch gekennzeichnet, dass**
das Dichtungselement (10) wenigstens teilweise, insbesondere vollständig, aus einem elastischen Material, z. B. einem Elastomer oder Kunststoff, besteht.

4. Kombination nach einem oder mehreren der vorhergehenden Ansprüche,
**dadurch gekennzeichnet, dass**
der Setzbolzen (2) an dem ersten Ende (3) mit einer Spitze (7) versehen ist.

5. Kombination nach einem oder mehreren der vorhergehenden Ansprüche,
**dadurch gekennzeichnet, dass**
das Dichtungselement (10) an dem Setzbolzen (2) angeordnet und/oder befestigt ist.

6. Kombination nach einem oder mehreren der vorhergehenden Ansprüche,
**dadurch gekennzeichnet, dass**
das Dichtungselement (10) an dem Anbauteil (14) angeordnet und/oder befestigt ist.

7. Kombination nach einem oder mehreren der vorhergehenden Ansprüche,
**dadurch gekennzeichnet, dass**
der Setzbolzen (2) wenigstens teilweise, insbesondere vollständig, aus Metall, z. B. Stahl, C-Stahl, Edelstahl, Kupfer oder Aluminium, besteht.

8. Verfahren zum Befestigen eines Anbauteiles (14) mit einem Setzbolzen (2) an einem Setzgegenstand (17), insbesondere mit einem Befestigungssystem (1) gemäß einem oder mehreren der vorhergehenden Ansprüche, mit den Schritten:
- Setzen des Setzbolzens (2) in den Setzgegenstand (17),
- Verbinden des Anbauteiles (14) mit dem Setzbolzen (2), indem das Anbauteil (14) an einem Lastangriffsabschnitt (6) des Setzbolzens (2) festgeschraubt wird,
- Abdichten des Setzbolzens (2) mit einem Dichtungselement (10) mit einer Öffnung (13), wobei innerhalb der Öffnung (13) der Setzbolzen (2) angeordnet ist und wobei das Dichtungselement (10) den Setzgegenstand (17) kontaktiert,
**dadurch gekennzeichnet, dass**
das Dichtungselement (10) zusätzlich das Anbauteil (14) kontaktiert und dadurch der Setzbolzen (2) zwischen dem Anbauteil (14) und dem Setzgegenstand (17) bezüglich der Umgebung abgedichtet wird.

9. Verfahren nach Anspruch 8,
**dadurch gekennzeichnet, dass**
das Dichtungselement (10) nach dem Setzen des Setzbolzens (2) zwischen dem Anbauteil (14) und dem Setzgegenstand (17) elastisch vorgespannt wird.

10. Verfahren nach Anspruch 8 oder 9,
**dadurch gekennzeichnet, dass**
das Dichtungselement (10) vor dem Setzen des Setzbolzens (2) an dem Setzbolzen (2) und/oder dem Anbauteil (14) befestigt ist und/oder wird.

11. Verfahren nach einem oder mehreren der Ansprüche 8 bis 10,
**dadurch gekennzeichnet, dass**
die Form des Dichtungselementes (10) während des Setzens des Setzbolzens (2) verändert wird, insbesondere das Dichtungselement (10) elastisch verformt wird.

## Claims

1. Combination of an attachment (14) and a fastening system (1) for fastening an attachment (14) to a setting object (17) by means of a setting bolt (2), the fastening system (1) comprising
- the setting bolt (2), having a first end (3) and a second end (4), with a fastening section (5) and a load-application section (6) with an external thread,
- a sealing element (10) with an opening (13) for sealing the setting bolt (2) inserted into the setting object (17), wherein the setting bolt (2) is arranged within the opening (13), and
- the attachment (14), screwed to the load-application section (6) of the setting bolt (2),
the combination further comprising
- the setting object (17), to which the fastening section (5) is fastened,
**characterised in that**
the sealing element (10) rests at a first end (11) on the setting object (17) and at a second end (12) on the attachment (14).

2. Combination according to claim 1, **characterised in that** the inside diameter of the sealing element (10) is larger than the maximum diameter of the setting bolt (2).

3. Combination according to one or more of the preceding claims, **characterised in that** the sealing element (10) consists at least partly, in particular entirely, of a flexible material, e.g. an elastomer or plastic.

4. Combination according to one or more of the preceding claims, **characterised in that** the setting bolt (2) is provided at a first end (3) with a point (7).

5. Combination according to one or more of the preceding claims, **characterised in that** the sealing element (10) is arranged on and/or fastened to the setting bolt (2).

6. Combination according to one or more of the preceding claims, **characterised in that** the sealing element (10) is arranged on and/or fastened to the attachment (14).

7. Combination according to one or more of the preceding claims, **characterised in that** the setting bolt (2) consists at least partly, in particular entirely, of metal, e.g. steel, high-carbon steel, stainless steel, copper or aluminium.

8. Method of fastening an attachment (14) to a setting object (17) with a setting bolt (2), in particular with a fastening system (1) according to one or more of the preceding claims, comprising the steps:
- setting the setting bolt (2) into the setting object (17),
- connecting the attachment (14) to the setting bolt (2) by screwing the attachment (14) to a load-application section (6) of the setting bolt (2), and
- sealing the setting bolt (2) with a sealing element (10) with an opening (13), wherein the setting bolt (2) is arranged within the opening (13) and wherein the sealing element (10) contacts the setting object (17),
**characterised in that**
the sealing element (10) additionally contacts the attachment (14) so that the setting bolt (2) is sealed with respect to the surroundings between the attachment (14) and the setting object (17).

9. Method according to claim 8, **characterised in that** the sealing element (10) is elastically pre-tensioned after the setting bolt (2) has been set between the attachment (14) and the setting objet (17).

10. Method according to claim 8 or claim 9, **characterised in that** the sealing element (10) has been and/or is fastened to the setting bolt (2) and/or to the attachment (14) before the setting bolt (2) is set.

11. Method according to one or more of claims 8 to 10, **characterised in that** the shape of the sealing element (10) is changed during the setting of the setting bolt (2), in particular the sealing element (10) is elastically deformed.

## Revendications

1. Combinaison d'une pièce d'ajout (14) et d'un système de fixation (1) pour fixer une pièce d'ajout (14) sur un objet de pose (17) au moyen d'une cheville de pose (2), le système de fixation (1) comprenant :
- la cheville de pose (2) comportant une première extrémité (3) et une seconde extrémité (4), avec une partie de fixation (5) et une partie d'application de charge (6) avec un filetage extérieur,
- un élément d'étanchéité (10) avec une ouverture (13) pour étanchéifier la cheville de pose (2) insérée dans l'objet de pose (17), la cheville de pose (2) étant agencée à l'intérieur de l'ouverture (13),
- la pièce d'ajout (14) qui est vissée sur la partie d'application de charge (6) de la cheville de pose (2),
la combinaison comprenant en outre :
- l'objet de pose (17) sur lequel est fixée la partie de fixation (5),
**caractérisée en ce que**
l'élément d'étanchéité (10) est en appui sur l'objet de pose (17) à une première extrémité (11) et sur la pièce d'ajout (14) à une seconde extrémité (12).

2. Combinaison selon la revendication 1,
**caractérisée en ce que**
le diamètre intérieur de l'élément d'étanchéité (10) est plus grand que le diamètre maximal de la cheville de pose (2).

3. Combinaison selon une ou plusieurs des revendications précédentes,
**caractérisée en ce que**
l'élément d'étanchéité (10) est constitué au moins partiellement, en particulier entièrement, d'un matériau élastique, par exemple un élastomère ou une matière plastique.

4. Combinaison selon une ou plusieurs des revendications précédentes,
**caractérisée en ce que**
la cheville de pose (2) est munie d'une pointe (7) sur la première extrémité (3).

5. Combinaison selon une ou plusieurs des revendications précédentes,
**caractérisée en ce que**
l'élément d'étanchéité (10) est agencé et/ou fixé sur la cheville de pose (2).

6. Combinaison selon une ou plusieurs des revendications précédentes,
**caractérisée en ce que**
l'élément d'étanchéité (10) est agencé et/ou fixé sur la pièce d'ajout (14).

7. Combinaison selon une ou plusieurs des revendications précédentes,
**caractérisée en ce que**
la cheville de pose (2) est constituée au moins partiellement, en particulier entièrement, d'un métal, par exemple de l'acier, de l'acier C, de l'acier spécial, du cuivre ou de l'aluminium.

8. Procédé pour fixer une pièce d'ajout (14) munie d'une cheville de pose (2) sur un objet de pose (17), en particulier en utilisant un système de fixation (1) selon une ou plusieurs des revendications précédentes, comportant les étapes consistant à :
- poser la cheville de pose (2) dans l'objet de pose (17),
- assembler la pièce d'ajout (14) avec la cheville de pose (2), en vissant la pièce d'ajout (14) sur une partie d'application de charge (6) de la cheville de pose (2),
- étanchéifier la cheville de pose (2) avec un élément d'étanchéité (10) comportant une ouverture (13), dans lequel la cheville de pose (2) est agencée à l'intérieur de l'ouverture (13) et dans lequel l'élément d'étanchéité (10) vient en contact avec l'objet de pose (17),
**caractérisé en ce que**
l'élément d'étanchéité (10) vient de plus en contact avec la pièce d'ajout (14) et la cheville de pose (2) est ainsi étanchéifiée par rapport à l'environnement entre la pièce d'ajout (14) et l'objet de pose (17).

9. Procédé selon la revendication 8,
**caractérisé en ce que**
l'élément d'étanchéité (10) est élastiquement préchargé après la pose de la cheville de pose (2) entre la pièce d'ajout (14) et l'objet de pose (17).

10. Procédé selon la revendication 8 ou 9,
**caractérisé en ce que**
l'élément d'étanchéité (10) est et/ou a été fixé avant la pose de la cheville de pose (2) sur la cheville de pose (2) et/ou la pièce d'ajout (14).

11. Procédé selon une ou plusieurs des revendications 8 à 10,
**caractérisé en ce que**
la forme de l'élément d'étanchéité (10) change pendant la pose de la cheville de pose (2), et l'élément d'étanchéité (10) est en particulier déformé élastiquement.
